# EUROPEAN PATENT APPLICATION

(11) **EP 4 793 474 A1**
(43) Date of publication of application: **19.08.2026**
(21) Application number: 25157915.7
(22) Date of filing: 14.02.2025
(51) Int. Cl.: F01P 11/04, B60H 1/00, B60K 11/02, F16L 37/00

(54) **FLUID CONTROL DEVICE**

(71) Applicant: VOLVO TRUCK CORPORATION, 405 08 Göteborg (SE)
(72) Inventor: LAVAUD, Paul, Göteborg 417 15 (SE); FOSSE, Olivier, 69230 ST GENIS LAVAL (FR)
(74) Representative: Germain Maureau

(57) **Abstract**

A fluid control device (10) including a first connection element (20) extending axially between a first opening (26) and a second opening (28) along an axis (A-A), the first connection element defining a cavity (30) extending between the first opening and the second opening; an insert (50) configured to be received within the cavity (30) of the first connection element (20), the insert extending axially between an inlet (56) and an outlet (58) and defining a channel (62) extending between the inlet and the outlet, the insert being configured to be transitioned axially between a first position and a second position; and a second connection element (80) configured to connect with the first connection element (20) and to transition the insert (50) from the first position of the insert toward the second position of the insert when the second connection element is connected with the first connection element.

## Description

### TECHNICAL FIELD

The disclosure relates generally to vehicles. In particular aspects, the disclosure relates to a fluid control device configured for use on a vehicle.

The disclosure may relate to heavy-duty vehicles, such as trucks, buses, and/or construction equipment, among other vehicle types. Although the disclosure may be described with respect to a particular vehicle, the disclosure is not restricted to any particular vehicle.

### BACKGROUND

A vehicle typically includes power unit, such as an internal combustion engine and/or hybrid internal combustion engine, having a manifold configured for circulation of a fluid within a fluid system of the vehicle. The fluid system may be configured to circulate the fluid to reduce a temperature of the power unit and one or more temperature regulation target of the vehicle, so as to prevent diminished mechanical efficiency and, eventually, mechanical failure.

The temperature regulation target may correspond to an exhaust gas recirculation valve of the vehicle configured to connect an exhaust manifold of the power unit to an intake manifold of the power unit to regulate a flow of an exhaust gas being recirculated within the power unit. Accordingly, the fluid system may be required to include a fluid line configured to circulate the fluid between the power unit and the temperature regulation target.

During servicing of the temperature regulation target, the temperature regulation target may require removal and/or replacement. Accordingly, during servicing of the temperature regulation target, the fluid line between the power unit and the temperature regulation target may remain open, resulting in the fluid being leaked from the fluid line and, thus, increased costs associated with servicing the temperature regulation target.

A vehicle may employ a device configured to stop a flow of the fluid through the fluid line during servicing of the temperature regulation target. However, currently available devices typically include several complex components and/or configurations, resulting in higher costs of manufacture and/or implementation of the device. Additionally or alternatively, currently available devices may include one or more component of the device within a flow path of the device, resulting in obstruction of the flow path, reduced cooling efficiency, and/or the like.

It is desirable to provide a fluid control device configured for use on a vehicle that includes simplified structures and/or relationships configured for automatic regulation of a fluid line within a fluid system of the vehicle, while providing a direct, unobstructed flow path of the fluid through the fluid line of the fluid system, thereby allowing for servicing of a temperature regulation target of the vehicle without sacrificing an efficiency of the fluid system of the vehicle.

### SUMMARY

According to aspects of the disclosure, a fluid control device configured for use on a vehicle is provided. The fluid control device includes a first connection element configured to connect with a fluid manifold of a vehicle. The first connection element extends axially between a first end and a second end along an axis. The first connection element defines a first opening at the first end of the first connection element, a second opening at the second end of the first connection element, and a cavity extending between the first opening and the second opening of the first connection element. The fluid control device includes an insert configured to be received within the cavity of the first connection element. The insert extends axially between a first end and a second end. The insert defines an inlet at or adjacent to the first end of the insert, an outlet at or adjacent to the second end of the insert, and a channel extending between the inlet and the outlet of the insert. The insert is configured to be transitioned axially between a first position and a second position. The fluid control device includes a second connection element configured to connect with the first connection element and to transition the insert from the first position of the insert toward the second position of the insert when the second connection element is connected with the first connection element.

According to aspects of the disclosure, the inlet of the insert may not be capable of receiving a flow of a fluid when the insert is in the first position of the insert and the inlet of the insert may be capable of receiving a flow of the fluid when the insert is in the second position of the insert.

According to aspects of the disclosure, the fluid control device may include a bias member configured to bias the insert toward the first position of the insert.

According to aspects of the disclosure, the bias member may be oriented radially about the insert.

According to aspects of the disclosure, the bias member may be oriented between the second end of the insert and the second end of the first connection element.

According to aspects of the disclosure, the first connection element may extend to a first length, the insert may extend to a second length, and the second length of the insert may be greater than the first length of the first connection element.

According to aspects of the disclosure, the first connection element may include a first engagement surface configured to engage with the bias member.

According to aspects of the disclosure, the insert may include a second engagement surface configured to engage with the bias member.

According to aspects of the disclosure, the second engagement surface of the insert may be oriented at or adjacent to the second end of the insert.

According to aspects of the disclosure, the second connection element may include a third engagement surface configured to engage with the second engagement surface of the insert.

According to aspects of the disclosure, the first connection element may include a fastening member at or adjacent to the first end of the first connection element configured to connect with the fluid manifold of the vehicle.

According to aspects of the disclosure, the second connection element may define a first opening at the first end of the second connection element, a second opening at the second end of the second connection element, and a passage extending between the first opening and the second opening of the second connection element.

According to aspects of the disclosure, the passage of the second connection element may be configured to receive at least a portion of the first connection element.

According to aspects of the disclosure, the passage of the second connection element may be configured to receive at least a portion of the insert.

According to aspects of the disclosure, the first end of the insert may be closed.

According to aspects of the disclosure, the inlet of the insert may be offset axially from the first end of the insert.

According to aspects of the disclosure, the insert may include a seal at or adjacent to the first end of the insert configured to seal against one or more of the first connection element and the fluid manifold of the vehicle.

According to aspects of the disclosure, a fluid system configured for use on a vehicle may be provided. The fluid system includes a fluid line configured to circulate a fluid through a vehicle and the fluid control device according to any aspect of the disclosure presented herein.

According to aspects of the disclosure, a vehicle is provided. The vehicle includes a fluid manifold configured to be in communication with a fluid line of a fluid system of the vehicle and the fluid control device according to any aspect of the disclosure presented herein.

According to aspects of the disclosure, a method of regulating a fluid within a fluid system of a vehicle is provided. The method includes providing the fluid control device according to any aspect of the disclosure presented herein and removing the second connection element from the first connection element to restrict a flow of a fluid through a fluid line of a fluid system of a vehicle.

In the manner described and according to aspects illustrated herein, the fluid control device, the fluid system, the vehicle, and the method are configured to provide simplified structures and/or relationships configured for automatic regulation of a fluid line within a fluid system of a vehicle, while providing a direct, unobstructed flow path of the fluid through the fluid line of the fluid system, thereby allowing for servicing of a temperature regulation target of the vehicle without sacrificing an efficiency of the fluid system of the vehicle.

The disclosed aspects, examples (including any preferred examples), and/or accompanying claims may be suitably combined with each other as would be apparent to a person having ordinary skill in the art. Additional features and advantages are disclosed in the following description, claims, and drawings, and in part will be readily apparent therefrom to persons skilled in the art and/or recognized by practicing the disclosure as described herein.

### BRIEF DESCRIPTION OF THE DRAWINGS

Aspects of the disclosure will be described with reference to the drawings, where like numerals reflect like elements:
**FIG. 1** shows a perspective view of a vehicle according to aspects of the disclosure;
**FIG. 2** shows a perspective view of a fluid control device configured for use on the vehicle according to **FIG. 1** according to aspects of the disclosure;
**FIG. 3** shows a side view of a power unit configured for use on the vehicle according to **FIG. 1** according to aspects of the disclosure;
**FIG. 4** shows schematic representation of a fluid system configured for use on the vehicle according to **FIG. 1** according to aspects of the disclosure;
**FIG. 5** shows a front view of a fluid manifold of the power unit according to **FIG. 3** according to aspects of the disclosure;
**FIG. 6** shows a side cross-sectional view of the fluid control device according to **FIG. 2****,** depicting the fluid control device in a closed state, according to aspects of the disclosure;
**FIG. 7** shows a side cross-sectional view of the fluid control device according to **FIG. 2****,** depicting the fluid control device in an open state, according to aspects of the disclosure;
**FIG. 8** shows a side view of a first connection element of the fluid control device according to **FIG. 2** according to aspects of the disclosure; and
**FIG. 9** shows a side view of an insert of the fluid control device according to **FIG. 2** according to aspects of the disclosure.

### DETAILED DESCRIPTION

The detailed description set forth above provides information and examples with sufficient detail to enable those skilled in the art to practice the disclosure.

In the description, like numerals represent like parts. Although the technology disclosed herein is described with reference to specific examples, it should be understood that modifications and changes may be made to these examples without going beyond the general scope as defined by the claims. In particular, individual characteristics of the various examples shown and/or mentioned herein may be combined in additional examples. Consequently, the description and the drawings should be considered in a sense that is illustrative rather than restrictive. The Figures, which are not necessarily to scale, depict illustrative aspects and are not intended to limit the scope of the disclosure. The illustrative aspects depicted are intended only as exemplary.

The term "exemplary" is used in the sense of "example," rather than "ideal." While aspects of the disclosure are amenable to various modifications and alternative forms, specifics thereof have been shown by way of example in the drawings and will be described in detail. It should be understood, however, that the intention is not to limit aspects of the disclosure to a particular example described. On the contrary, the intention of this disclosure is to cover all modifications, equivalents, and alternatives falling within the scope of the disclosure.

Various materials, methods of construction, methods of fastening, and the like may be described in the context of disclosed examples. Those skilled in the art will recognize known substitutes for the materials, construction methods, fastening methods, and the like, all of which are contemplated as compatible with the disclosed example and are intended to be encompassed by the appended claims.

As used in this disclosure and the appended claims, the singular forms "a," "an," and "the" include plural referents, unless the content clearly dictates otherwise. As used in this disclosure and the appended claims, the term "or" is generally employed in a sense including "and/or," unless the content clearly dictates otherwise.

Throughout the description, including the claims, the terms "comprising a," "including a," and "having a" should be understood as being synonymous with "comprising one or more," "including one or more," and "having one or more" unless otherwise stated. In addition, any range set forth in the description, including the claims, should be understood as including its end value(s), unless otherwise stated. Specific values for described elements should be understood to be within accepted manufacturing or industry tolerances known to one of skill in the art, and any use of the terms "substantially," "approximately," and "generally" should be understood to mean falling within such accepted tolerances.

When an element or feature is referred to herein as being "on," "engaged to," "connected to," or "coupled to" another element or feature, it may be directly on, engaged, connected, or coupled to the other element or feature, or intervening elements or features may be present. In contrast, when an element or feature is referred to herein as being "directly on," "directly engaged to," "directly connected to," or "directly coupled to" another element or feature, there may be no intervening elements or features present. Other words used to describe the relationship between elements or features should be interpreted in a like manner (e.g., "between" versus "directly between," "adjacent" versus "directly adjacent," etc.).

Spatially relative terms, such as "top," "bottom," "middle," "inner," "outer," "beneath," "below," "lower," "above," "upper," and the like may be used herein for ease of description to describe one element or relationship of a feature to another element(s) or feature(s) as illustrated in the drawings. Spatially relative terms may be intended to encompass different orientations of a device in use or operation in addition to the orientation depicted in the drawings. For example, if the device in the drawings is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

Although the terms "first," "second," "third," etc. may be used herein to describe various elements, components, regions, layers, sections, and/or parameters, these elements, components, regions, layers, sections, and/or parameters should not be limited by these terms. These terms are only used to distinguish one element, component, region, layer, section, or parameter from another element, component, region, layer, section, or parameter. Thus, a first element, component, region, layer, section, or parameter discussed herein could be termed a second element, component, region, layer, section, or parameter without departing from the teachings of the present disclosure.

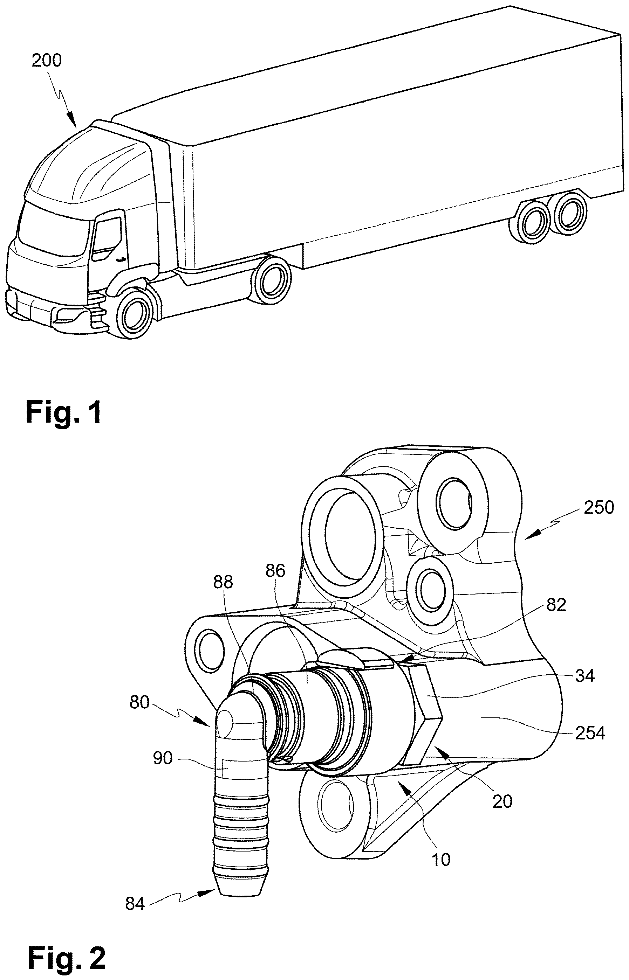

**FIGS. 1-2** show a fluid control device 10 configured for use on a vehicle 200. Additionally or alternatively, it is contemplated that the fluid control device 10 may be considered and/or referred to as being included by the vehicle 200. However, the fluid control device 10 will be described herein as being independent of the vehicle 200, unless reference to the fluid control device 10 being included by the vehicle 200 is otherwise necessary. Referring to **FIG. 1****,** it is contemplated that the vehicle 200 may be a heavy-duty vehicle, such as a truck, bus, and/or construction equipment. However, it should be understood that the fluid control device 10 may be configured for use on other types of vehicles. It is contemplated that the fluid control device 10 may be configured for use on an internal combustion engine vehicle, a battery electric vehicle, a fuel cell electric vehicle, and/or a hybrid thereof. However, reference to an internal combustion engine vehicle will be used herein, unless reference to a battery electric vehicle, a fuel cell electric vehicle, and/or a hybrid thereof is otherwise necessary.

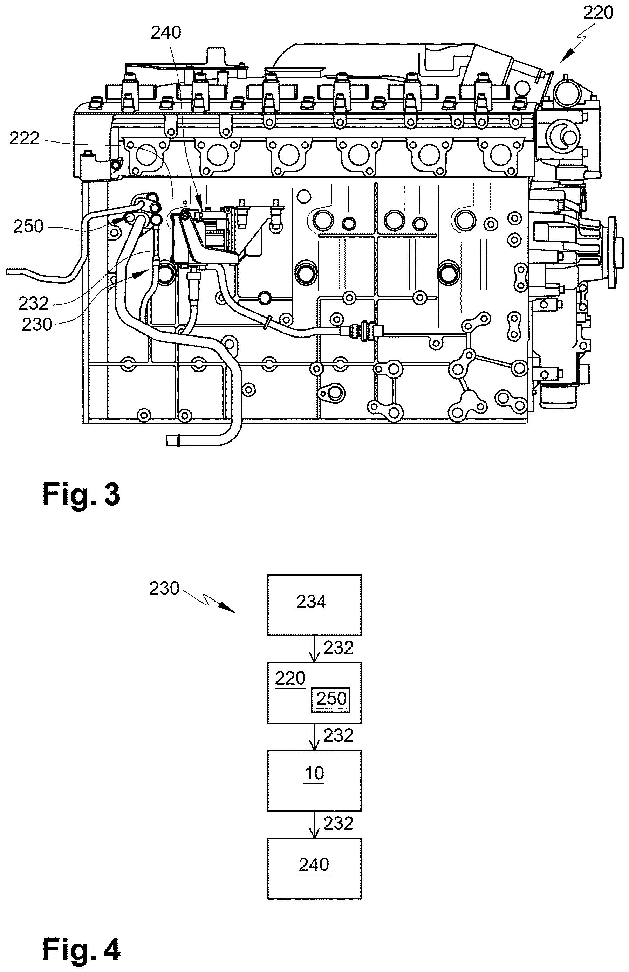

As shown in **FIGS. 3-4****,** the vehicle 200 to which the fluid control device 10 is configured for use on may include a power unit 220. In examples, the power unit 220 may be configured to be, considered to be, and/or referred to as an internal combustion engine. Accordingly, the power unit 220 may include an engine block 222 defining one or more cylinder (not shown) configured to receive a piston (not shown). Additionally, the cylinder may be configured for reciprocation of the piston within the cylinder. It is contemplated that the cylinder and the piston may be configured to form a combustion chamber. The combustion chamber may be configured for combustion of a fuel-air mixture.

The power unit 220 may include one or more manifold configured to circulate one or more fluid to, from, and/or within the power unit 220. In examples, the power unit 220 may include an intake manifold (not shown) configured to supply the fuel-air mixture to the combustion chamber of the power unit 220 for combustion of the fuel-air mixture. Additionally, the power unit 220 may include an exhaust manifold (not shown) configured to collect exhaust gasses resulting from combustion of the fuel-air mixture from the combustion chamber.

Referring to **FIGS. 3-4****,** the vehicle 200 to which the fluid control device 10 is configured for use on, may include a fluid system 230 configured to circulate a fluid (not shown) through a fluid line 232 to remove heat and/or reduce friction at the power unit 220 and one or more temperature regulation target 240 (discussed in further detail below) of the vehicle 200. It is contemplated that the fluid system 230 may be configured to be, considered to be, and/or referred to as a "cooling system" and/or a "coolant system." Additionally, it is contemplated that the fluid may be configured to absorb heat and/or provide lubrication at one or more of the power unit 220 and the temperature regulation target 240. In examples, the fluid line 232 may be configured to be in communication with one or more of the power unit 220 and the temperature regulation target 240. In examples, the fluid system 230 may include a reservoir 234 configured to store the fluid for distribution to one or more of the power unit 220 and the temperature regulation target 240.

As shown by **FIGS. 3-4****,** the temperature regulation target 240 may be configured to be, considered to be, and/or referred to as an exhaust gas recirculation valve (may also be referred to herein as an "EGR valve") configured to connect the exhaust manifold of the power unit 220 to the intake manifold of the power unit 220 to regulate a flow of an exhaust gas being recirculated within the power unit 220. The fluid line 232 of the fluid system 230 may be configured to connect one or more of the power unit 220, the temperature regulation target 240, and the reservoir 234 of the fluid system 230. Additionally or alternatively, it is contemplated that temperature regulation target 240 may be configured to be in communication with the power unit 220. In this manner, fluid circulating through the fluid line 232 within the power unit 220 may be directed to the temperature regulation target 240, thereby reducing a temperature within one or more of the power unit 220 and the temperature regulation target 240.

Additionally or alternatively, the temperature regulation target 240 may be configured to be, considered to be, and/or referred to as an exhaust brake (not shown) configured to restrict an exhaust path within the vehicle 200 to generate back pressure within an exhaust system of the vehicle 200 to reduce a speed of the power unit 220 and, thus, a speed of the vehicle 200. However, the temperature regulation target 240 will be described herein as being configured to be, considered to be, and/or referred to as the EGR valve of the vehicle 200, unless reference to the temperature regulation target 240 being configured to be, considered to be, and/or referred to as the exhaust brake is otherwise necessary.

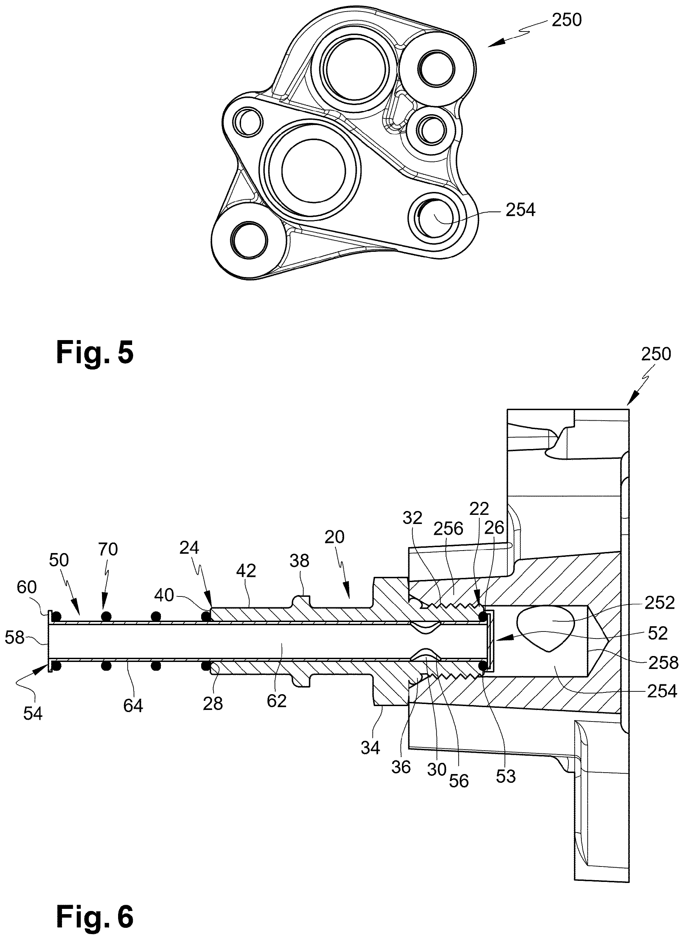

As shown in **FIGS. 2-7****,** the power unit 220 may include a fluid manifold 250 configured to be in communication with the fluid line 232 of the fluid system 230. Accordingly, the fluid manifold 250 may be configured to be in communication with the temperature regulation target 240. Referring to **FIGS. 6-7****,** the fluid manifold 250 may define a conduit 252 configured to be in communication with the fluid line 232 and, thus, in communication with the temperature regulation target 240. Additionally or alternatively, the fluid manifold 250 may define a port 254 configured to form a connection between the power unit 220 and the temperature regulation target 240, such that the fluid line 232 may extend between the fluid manifold 250 and the temperature regulation target 240. Accordingly, the fluid manifold 250 may include a fastening member 256, such as a plurality of threads and/or the like, configured form a connection between the power unit 220 and the temperature regulation target 240. The fluid manifold 250 may include an abutment surface 258 oriented at or adjacent to the conduit 252 configured to define at least a portion of one or more of the conduit 252 and the port 254. It is contemplated that the abutment surface 258 may be configured to be, considered to be, and/or referred to as "wall."

The fluid control device 10 may be configured to connect with one or more of the fluid manifold 250 and the fluid system 230. In examples, the fluid control device 10 may be configured to be in communication with the conduit 252 of the fluid manifold 250. Additionally or alternatively, the fluid control device 10 may be configured to connect with the port 254 of the fluid manifold 250. It is contemplated that the fluid control device 10 may be configured to be, considered to be, and/or referred to as being included by the power unit 220. Additionally or alternatively, it is contemplated that the fluid control device 10 may be configured to be, considered, and/or referred to as being included by the fluid system 230. However, the fluid control device 10 will be described herein as being independent of the power unit 220 and/or the fluid system 230, unless reference to the fluid control device 10 being included by the power unit 220 and/or the fluid system 230 is otherwise necessary.

Referring to **FIGS. 2****,** **4****, and** **6****-7,** the fluid control device 10 is configured to regulate a flow of the fluid within the fluid system 230. In particular, the fluid control device 10 is configured to regulate a flow of the fluid through the fluid line 232 of the fluid system 230. In examples, the fluid control device 10 is configured to regulate a flow of the fluid between the power unit 220 and the temperature regulation target 240. In particular, the fluid control device 10 may be configured to regulate a flow of the fluid from the power unit 220 toward and/or to the temperature regulation target 240. Accordingly, the fluid control device 10 is configured to be in communication with the power unit 220 and the temperature regulation target 240. In examples, the fluid control device 10 may be configured to be positioned between the power unit 220 and the temperature regulation target 240. At least a portion of the fluid control device 10 may be configured to connect with the power unit 220. In particular, at least a portion of the fluid control device 10 may be configured to connect with the fluid manifold 250 of the power unit 220. Additionally, at least a portion of the fluid control device 10 may be configured to connect with the temperature regulation target 240. In this manner, the fluid control device 10 is configured to regulate a flow of the fluid within the fluid system 230 and, in particular, between the power unit 220 and the temperature regulation target 240.

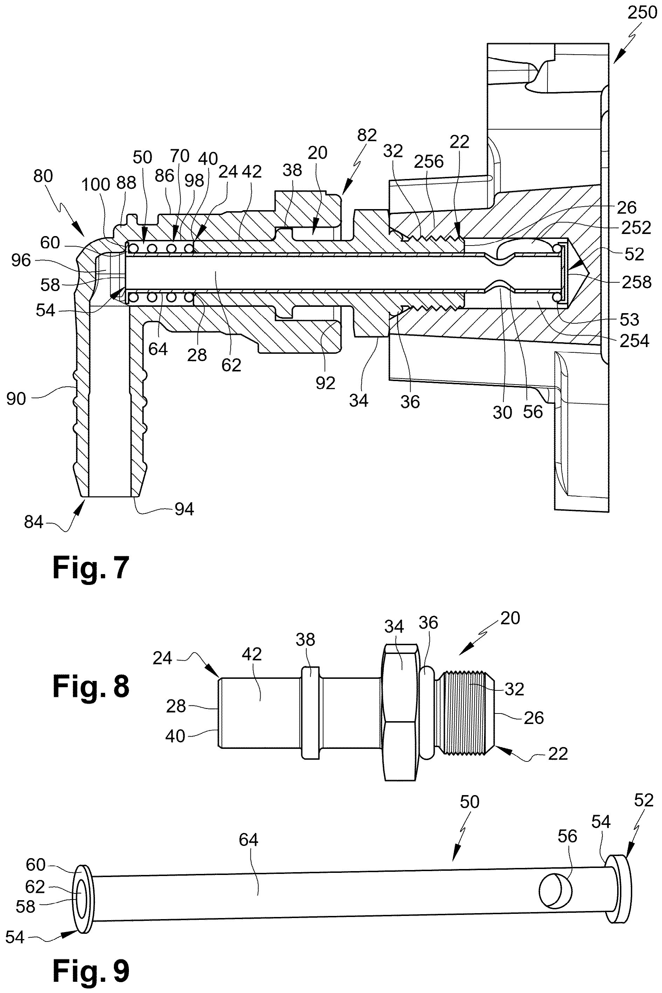

As illustrated by **FIGS. 6-7****,** the fluid control device 10 is configured to be transitioned between a closed state (see **FIG. 6**) and an open state (see **FIG. 7**). In the open state, the fluid control device 10 is configured to distribute a flow of the fluid through the fluid line 232 of the fluid system 230. Additionally or alternatively, in the open state, the fluid control device 10 is configured to distribute a flow of the fluid through the fluid line 232 from the fluid manifold 250 of the power unit 220 toward and/or to the temperature regulation target 240. In the closed state, the fluid control device 10 is configured to restrict a flow of the fluid through the fluid line 232. It is contemplated that the term "restrict" as used herein may be understood as reducing and/or stopping a flow of the fluid through the fluid line 232. Additionally or alternatively, in the closed state, the fluid control device 10 is configured to restrict a flow of the fluid through the fluid line 232 from the fluid manifold 250 toward and/or to the temperature regulation target 240. In examples, the fluid control device 10 may be configured to be biased toward the closed state. In this manner, during servicing of the temperature regulation target 240, the fluid control device 10 may be transitioned toward and/or to the closed state, thereby preventing the fluid from being leaked from the fluid line 232 when the temperature regulation target 240 is removed and/or replaced. Accordingly, implementation of the fluid control device 10 avoids costs associated with servicing the temperature regulation target 240.

Referring to **FIGS. 6-8****,** the fluid control device 10 includes a first connection element 20 configured to connect with the fluid manifold 250 of the power unit 220. Alternatively, the first connection element 20 may be integrally formed, in one piece, with the fluid manifold 250. However, the first connection element 20 will be described herein as being independent of the fluid manifold 250, unless description of the first connection element 20 being integrally formed with the fluid manifold 250 is otherwise necessary. The first connection element 20 extends axially between a first end 22 and a second end 24 along an axis A-A of the fluid control device 10. In examples, the axis A-A of the fluid control device 10 may extend longitudinally. It is contemplated that the axis A-A of the fluid control device 10 may also be considered to be and/or referred to as the axis A-A of each component (i.e. the first connection element 20, a second connection element 80 of the fluid control device 10, an insert 50 of the fluid control device 10, and/or a bias member 70 of the fluid control device 10 (discussed in further detail below)) of the fluid control device 10.

The first connection element 20 defines a first opening 26 at the first end 22 of the first connection element 20, a second opening 28 at the second end 24 of the first connection element 20, and a cavity 30 extending axially between the first opening 26 and the second opening 28 of the first connection element 20. The first connection element 20 is configured to be oriented radially outwardly of the insert 50 (discussed in further detail below) of the fluid control device 10. It is contemplated that the terms "outer," "outward," "inner," and "inward" may be understood in relation to the axis A-A, such that the terms "outer" and "outward" may correspond to a position and/or direction farther from and/or away from the axis A-A in contrast with an "inner" and "inward" position and/or direction and the terms "inner" and "inward" may correspond to a position and/or direction closer to and/or toward the axis A-A in contrast with an "outer" and "outward" position and/or direction. In particular, the first connection element 20 is configured to receive at least a portion of the insert 50 of the fluid control device 10. In examples, the first connection element 20 is configured such that at least a portion of the insert 50 extends through the first opening 26, the second opening 28, and the cavity 30 of the first connection element 20. In examples, the first connection element 20 is configured to be in surface-to-surface contact with at least a portion of the insert 50 within the cavity 30 of the first connection element 20 when the insert 50 is received by the first connection element 20. In examples, the first connection element 20 may be substantially tubular in shape. Additionally or alternatively, the first connection element 20 may be formed from a substantially rigid material, such as a plastic, a metal, and/or the like.

At least a portion of the first connection element 20 is configured to be received within the port 254 of the fluid manifold 250 of the power unit 220. In examples, the first connection element 20 is configured to be in surface-to-surface contact with the fluid manifold 250 when the first connection element 20 is received within the port 254 of the fluid manifold 250. Additionally or alternatively, at least a portion of the first connection element 20 may be configured to form the connection with the port 254 of the fluid manifold 250. The first end 22 of the first connection element 20 may be configured to form the connection with the port 254 of the fluid manifold 250. In examples, the first connection element 20 may be configured to form an interference-fit connection and/or the like with the port 254 of the fluid manifold 250. Additionally or alternatively, the first connection element 20 may include a fastening member 32 configured to be complimentary to the fastening member 256 of the port 254 of the fluid manifold 250, such as a plurality of threads and/or the like. The fastening member 32 of the first connection element 20 may be oriented at or adjacent to the first end 22 of the first connection element 20.

In examples, the first connection element 20 may include a first stop member 34 configured to come into abutment with at least a portion of the fluid manifold 250 of the power unit 220 to indicate and/or form the connection between the first connection element 20 and the port 254 of the fluid manifold 250 and, thus, between the fluid control device 10 and the fluid manifold 250. The first stop member 34 may extend radially from the first connection element 20. In examples, the first connection element 20 may include a seal 36 configured to seal against the port 254 of the fluid manifold 250. The seal 36 may be included at or adjacent to the first abutment member 34. In examples, the first connection element 20 may include a second abutment member 38 configured to come into abutment with at least a portion of the second connection element 80 (discussed in further detail below) to indicate and/or form the connection between the first connection element 20 and the second connection element 80 and, thus, between the fluid control device 10 and the temperature regulation target 240. The first stop member 34 may extend radially from the first connection element 20.

At least a portion of the first connection element 20 may be configured to engage the bias member 70 (discussed in further detail below) of the fluid control device 10. Additionally or alternatively, at least a portion of the first connection element 20 may be configured to exert a force on the bias member 70. The first connection element 20 may include a first engagement surface 40 configured to engage and/or apply a force on the bias member 70. The first engagement surface 40 of the first connection element 20 may be oriented at or adjacent to the second end 24 of the first connection element 20. Additionally, the first engagement surface 40 of the first connection element 20 may be oriented on an outer surface 42 of the first connection element 20. In this manner, the bias member 70 may be oriented outwardly of the insert 50 of the fluid control device 10 and, thus, outwardly of a channel 62 of the insert 50 and the fluid line 232 of the fluid system 230.

As shown in **FIGS. 6-7** **and** **9,** the fluid control device 10 includes the insert 50. The insert 50 is configured to be received within the cavity 30 of the first connection element 20. The insert 50 extends axially between a first end 52 and a second end 54. The insert 50 defines an inlet 56 configured to receive a flow of the fluid. The inlet 56 of the insert 50 may be oriented at or adjacent to the first end 52 of the insert 50. Additionally or alternatively, the inlet 56 of the insert 50 may be offset axially from the first end 52 of the insert 50, in a direction toward the second end 54 of the insert 50. Accordingly, the inlet 56 of the insert 50 may be configured to receive the fluid radially.

The insert 50 may be configured to extend to a length greater than a length of the first connection element 20. Additionally or alternatively, the first end 52 of the insert 50 may extend out of the first end 22 of the first connection element 20, such that the first end 52 of the insert 50 is oriented externally with respect to the first connection element 20. In this manner, the inlet 56 of the insert 50 is capable of being oriented externally and internally with respect to the first connection element 20, thereby allowing for the fluid control device 10 to be transitioned between the open state and the closed state of the fluid control device 10, respectively. Additionally, the first end 52 of the insert 50 is capable of interacting and/or cooperating with the abutment surface 258 of the fluid manifold 250 of the power unit 220. The second end 54 of the insert 50 may extend out of the second end 24 of the first connection element 20, such that the second end 54 of the insert 50 is oriented externally with respect to the first connection element 20. In this manner, the second end 54 of the insert 50 is capable of interacting and/or cooperating with the second end 24 of the first connection element 20 to support and engage the bias member 70 (discussed in further detail below) externally with respect to a flow of the fluid through the fluid line 232 of the fluid system 230.

In examples, the first end 52 of the insert 50 is closed and the second end 54 of the insert 50 is open. The first end 52 of the insert 50 may include a diameter greater than a diameter of the first opening 26 and/or the cavity 30 of the first connection element 20. Accordingly, referring to **FIG. 6****,** the first end 52 of the insert 50 may be configured to abut the first end 22 of the first connection element 20 (i.e. when the insert 50 is in a first position of the insert 50). In examples, the insert 50 may include a seal 53 at or adjacent to the first end 52 of the insert 50. In particular, the seal 53 may be oriented between the first end 52 of the insert 50 and the inlet 56 of the insert 50. The seal 53 may be configured to seal against one or more of the fluid manifold 250 of the power unit 220 and the first connection element 20. In particular, the seal 53 may be configured to seal against one or more of the port 254 of the fluid manifold 250 and the first end 22 of the first connection element 20. Accordingly, referring to **FIG. 6****,** a flow of the fluid is not capable of flowing into the inlet 56 of the insert 50 when the fluid control device 10 is connected to the fluid manifold 250 and the inlet 56 of the insert 50 is not in communication with the conduit 252 of the fluid manifold 250 (i.e. when the insert 50 is in the first position of the insert 50). Additionally, referring to **FIG. 7****,** a flow of the fluid is only capable of flowing into the inlet 56 of the insert 50 when the fluid control device 10 is connected to the fluid manifold 250 and the inlet 56 of the insert 50 is in communication with the conduit 252 of the fluid manifold 250 (i.e. when the insert 50 is in a second position of the insert 50).

The insert 50 defines an outlet 58 configured to distribute a flow of the fluid. The outlet 58 is oriented at or adjacent to the second end 54 of the insert 50. The insert 50 defines a channel 62 configured for a flow of the fluid from the inlet 56 of the insert 50 toward and/or to the outlet 58 of the insert 50. The channel 62 extends axially between the inlet 56 of the insert 50 and the outlet 58 of the insert 50.

The insert 50 includes a second engagement surface 60 configured to engage the bias member 70 (discussed in further detail below) of the fluid control device 10. It is contemplated that the second engagement surface 60 of the insert 50 may be configured to be, considered to be, and/or referred to as a "flange." The second engagement surface 60 of the insert 50 extends radially outwardly from an outer surface 64 of the insert 50. In this manner, the bias member 70 may be oriented outwardly of the insert 50 and, thus, outwardly of the channel 62 of the insert 50 and the fluid line 232 of the fluid system 230. The second engagement surface 60 may be oriented at or adjacent to the second end 54 of the insert 50. In this manner, the insert 50 is configured to interact and/or cooperate with the first engagement surface 40 of the first connection element 20 to engage the bias member 70. In examples, the insert 50 may be substantially tubular in shape. Additionally or alternatively, the insert 50 may be formed from a substantially rigid material, such as a plastic, a metal, and/or the like.

The insert 50 is configured to receive a flow of the fluid from the fluid manifold 250 of the power unit 220. Accordingly, the inlet 56 of the insert 50 may be configured to be in communication with the conduit 252 of the fluid manifold 250. In examples, the outlet 58 of the insert 50 is configured to distribute a flow of the fluid toward and/or to the temperature regulation target 240. Accordingly, the outlet 58 of the insert 50 may be configured to be in communication with the temperature regulation target 240. It is contemplated that the inlet 56, the outlet 58, and the channel 62 of the insert 50 may be configured to be, considered to be, and/or referred to as being included on the fluid line 232 of the fluid system 230 when the fluid control device 10 is connected with the fluid manifold 250.

Referring to **FIGS. 6-7****,** the insert 50 is configured to be transitioned axially between the first position (see **FIG. 6**) and the second position (see **FIG. 7**). In particular, the insert 50 is configured to be transitioned axially between the first position and the second position of the insert 50 relative to the first connection element 20. In examples, the insert 50 may be translated between the first position and the second position of the insert 50 through a sliding action and/or movement.

Referring to **FIG. 6****,** in the first position of the insert 50, the inlet 56 of the insert 50 is oriented internally with respect to the cavity 30 of the first connection element 20 and, thus, is not in communication with the conduit 252 of the fluid manifold 250 of the power unit 220. Additionally or alternatively, in the first position of the insert 50, the inlet 56 of the insert 50 is unaligned with the conduit 252 of the fluid manifold 250 and, thus, is not in communication with the conduit 252 of the fluid manifold 250. Additionally or alternatively, in the first position of the insert 50, the first end 52 of the insert 50 and/or the seal 53 of the insert 50 is oriented between the inlet 56 of the insert 50 and the conduit 252 of the fluid manifold 250 and, thus, in the first position of the insert 50, the inlet 56 of the insert 50 is not in communication with the conduit 252 of the fluid manifold 250. When the inlet 56 of the insert 50 is not in communication with the conduit 252 of the fluid manifold 250, the inlet 56 of the insert 50 is not capable of receiving a flow of the fluid from the conduit 252 of the fluid manifold 250. Accordingly, it is contemplated that the first position of the insert 50 corresponds to the closed state of the fluid control device 10. In this manner, the fluid control device 10 is capable of regulating a flow of the fluid within the fluid system 230 by restricting a flow of the fluid along the fluid line 232 of the fluid system 230.

Referring to **FIG. 7****,** in the second position of the insert 50, the inlet 56 of insert 50 is oriented externally with respect to the cavity 30 of the first connection element 20 and, thus, is in communication with the conduit 252 of the fluid manifold 250 of the power unit 220. Additionally or alternatively, in the second position of the insert 50, the inlet 56 of the insert 50 is aligned with the conduit 252 of the fluid manifold 250 and, thus, is in communication with the conduit 252 of the fluid manifold 250. Additionally or alternatively, in the second position of the insert 50, at least a portion of the conduit 252 of the fluid manifold 250 is oriented between at least a portion of the inlet 56 of the insert 50 and the first end 52 of the insert 50 and/or the seal 53 of the insert 50 and, thus, the inlet 56 of the insert 50 is in communication with the conduit 252 of the fluid manifold 250. When the inlet 56 of the insert 50 is in communication with the conduit 252 of the fluid manifold 250, the inlet 56 of the insert 50 is capable of receiving a flow of the fluid from the conduit 252 of the fluid manifold 250. Accordingly, it is contemplated that the second position of the insert 50 corresponds to the open state of the fluid control device 10. In this manner, the fluid control device 10 is capable of regulating a flow of the fluid within the fluid system 230 by distributing a flow of the fluid along the fluid line 232 of the fluid system 230.

Referring to **FIGS. 6-7****,** the fluid control device 10 includes the bias member 70. The bias member 70 is configured to bias the insert 50 toward the first position of the insert 50. In examples, the bias member 70 may be in the form of a coil spring, a wave spring, and/or the like. The bias member 70 is configured to be oriented radially about the insert 50. In particular, the bias member 70 is configured to be oriented radially about the outer surface 64 of the insert 50. The bias member 70 extends axially between the first end 52 and the second end 54 of the insert 50.

In examples, the bias member 70 may be oriented at or adjacent to the second end 54 of the insert 50. Additionally, the bias member 70 may be oriented at or adjacent to the second end 24 of the first connection element 20. In examples, the bias member 70 is oriented between the second end 54 of the insert 50 and the second end 24 of the first connection element 20. In particular, the bias member 70 is oriented between the second engagement surface 60 of the insert 50 and the first engagement surface 40 of the first connection element 20. In examples, the bias member 70 is engaged with and may be attached to each of the second engagement surface 60 of the insert 50 and the first engagement surface 40 of the first connection element 20. In this manner, the bias member 70 is oriented externally with respect to the insert 50 and the first connection element 20 and, thus, externally with respect to the channel 62 of the insert 50 and a flow of the fluid through the fluid line 232 of the fluid system 230. Additionally or alternatively, in this manner, the bias member 70 is oriented externally with respect to the port 254 of the fluid manifold 250 of the power unit 220 and, thus, externally with respect to a flow of the fluid through the fluid line 232 of the fluid system 230.

Referring to **FIGS. 2** **and** **7****,** the fluid control device 10 includes the second connection element 80. The second connection element 80 may be configured to connect with the first connection element 20. Additionally, the second connection element 80 is configured to transition the insert 50 from the first position of the insert 50 toward and/or to the second position of the insert 50 when the second connection element 80 is connected with the first connection element 20. Additionally, the second connection element 80 is configured to be in communication with the temperature regulation target 240 and, thus, the fluid line 232 of the fluid system 230. In examples, the second connection element 80 may be substantially tubular in shape. Additionally or alternatively, the second connection element 80 may be formed from a substantially rigid material, such as a plastic, a metal, and/or the like.

The second connection element 80 extends between a first end 82 and a second end 84. In examples, at least a portion of the second connection element 80 extends axially between the first end 82 and the second end 84 of the second connection element 80. Additionally or alternatively, at least a portion of the second connection element 80 may extend radially between the first end 82 and the second end 84 of the second connection element 80. In examples, a first part 86 of the second connection element 80 may extend axially from the first end 82 of the second connection element 80 toward and/or to a junction 88 between the first end 82 of the second connection element 80 and the second end 84 of the second connection element 80. Additionally, a second part 90 of the second connection element 80 may extend radially from the second end 84 of the second connection element 80 toward and/or to the junction 88 of the second connection element 80. In this manner, the second connection element 80 may be configured to facilitate communication with the temperature regulation target 240 and/or to improve compactness of the fluid control device 10.

Referring to **FIG. 7****,** the second connection element 80 defines a first opening 92 at the first end 82 of the second connection element 80, a second opening 94 at the second end 84 of the second connection element 80, and a passage 96 extending between the first opening 92 and the second opening 94 of the second connection element 80. In examples, at least a portion of the passage 96 extends axially between the first opening 92 and the second opening 94 of the second connection element 80 (i.e. within the first part 86 of the second connection element 80). Additionally or alternatively, at least a portion of the passage 96 may extend radially between the first opening 92 and the second opening 94 of the second connection element 80 (i.e. within the second part 90 of the second connection element 80). The second connection element 80 is configured to be oriented radially outwardly of the first connection element 20 and the insert 50. In particular, the second connection element 80 is configured to receive at least a portion of one or more of the first connection element 20 and the insert 50 through the first opening 92 of the second connection element 80 and within the passage 96 of the second connection element 80. In examples, the second connection element 80 may be configured to receive at least the second end 24 of the first connection element 20 and the second end 54 of the insert 50 through the first opening 92 of the second connection element 80 and within the passage 96 of the second connection element 80.

The second connection element 80 may be configured to connect with the first connection element 20 when the first connection element 20 is received by the second connection element 80. The second connection element 80 may be configured to connect with the first connection element 20 within the passage 96 of the second connection element 80. In examples, the second connection element 80 may be configured to form a connection with the first connection element 20 through an interference-fit connection between an inner surface 98 of the second connection element 80 and the outer surface 42 of the first connection element 20 and/or one or more of the first abutment member 34 and the second abutment member 38. Additionally or alternatively, the second connection element 80 may be configured to form the connection with the first connection element 20 through a threaded connection and/or the like.

The second connection element 80 is configured to transition the insert 50 from the first position toward and/or to the second position of the insert 50 when the insert 50 is received by the second connection element 80. Additionally or alternatively, the second connection element 80 is configured to transition the insert 50 from the first position toward and/or to the second position of the insert 50 when the second connection element 80 is connected with the first connection element 20.

In examples, the second connection element 80 includes a third engagement surface 100 configured to engage with the second engagement surface 60 of the insert 50 when the insert 50 is received by the second connection element 80. It is contemplated that the third engagement surface 100 of the second engagement element may be configured to be, considered to be, and/or referred to as a "shoulder." The third engagement surface 100 extends radially inwardly within the passage 96 defined by the second connection element 80. In examples, the third engagement surface 100 may be oriented at or adjacent to the junction 88 of the second connection element 80. The third engagement surface 100 of the second connection element 80 is configured to exert a force on the second engagement surface 60 of the insert 50 when the second connection element 80 is moved and/or pushed toward the fluid manifold 250 of the power unit 220. The force exerted on the second engagement surface 60 of the insert 50 transitions the insert 50 from the first position toward and/or to the second position of the insert 50. Additionally or alternatively, in the second position of the insert 50, the first end 52 of the insert 50 applies a force on the abutment surface 258 of the fluid manifold 250 and, thus, the insert 50 is no longer capable of movement, allowing for a continued exertion of force on the second engagement surface 60 of the insert 50 to compress the bias member 70.

Referring to **FIG. 6****,** in operation, the insert 50 is included within the cavity 30 of the first connection element 20. The bias member 70 is included about the insert 50, between the first engagement surface 40 of the first connection element 20 and the second engagement surface 60 of the insert 50. A user may connect the first connection element 20 with the port 254 of the fluid manifold 250 of the power unit 220. In examples, the insert 50 may be in the first position of the insert 50 when the first connection element 20 is connected with the port 254 of the fluid manifold 250. Accordingly, the fluid control device 10 may be in the closed state when the fluid control device 10 is connected with of the fluid manifold 250.

Referring to **FIG. 7****,** in operation, the user may connect the second connection element 80 with the first connection element 20. Accordingly, the user may position the first connection element 20 and the insert 50 within the first opening 26 and/or the cavity 30 of the second connection element 80 and move and/or push the second connection element 80 toward and/or to the fluid manifold 250 of the power unit 220. Moving and/or pushing the second connection element 80 toward and/or to the fluid manifold 250 causes the third engagement surface 100 of the second connection element 80 to exert a force on the second engagement surface 60 of the insert 50, thereby transitioning the insert 50 from the first position of the insert 50 toward and/or to the second position of the insert 50. Accordingly, connection of the second connection element 80 to the first connection element 20 may automatically transition the fluid control device 10 to the open state. Additionally or alternatively, when the insert 50 is in the second position of the insert 50, the first end 52 of the insert 50 applies a force on the abutment surface 258 of the fluid manifold 250 and is no longer capable of movement. Continued exertion of the force on the second engagement surface 60 of the insert 50 by the third engagement surface 100 of the second connection element 80 compresses the bias member 70 between the second engagement surface 60 of the insert 50 and the first engagement surface 40 of the first connection element 20 until the connection between the second connection element 80 and the first connection element 20 is secured. Additionally or alternatively, the bias member 70 is compressed between the second engagement surface 60 of the insert 50 and the first engagement surface 40 of the first connection element 20 until at least a portion of the second connection element 80 comes into abutment with the second abutment member 38 of the first connection element 20.

Additionally or alternatively, removal of the second connection element 80 from the first connection element 20 removes the force exerted by the third engagement surface 100 of the second connection element 80 on the second engagement surface 60 of the insert 50, thereby causing the bias member 70 to transition the insert 50 from the second position of the insert 50 toward and/or to the first position of the insert 50. Accordingly, removal of the second connection element 80 from the first connection element 20 automatically transitions the fluid control device 10 to the closed state. When the fluid control device 10 is in the closed state, the user may service the temperature regulation target 240, without the fluid being leaked from the fluid line 232 of the fluid system 230.

In this manner, the fluid control device 10 is configured to include simplified structures and/or relationships configured for automatic regulation of the fluid line 232 within the fluid system 230 of the vehicle 200, while providing a direct, unobstructed flow path of the fluid through the fluid line 232 of the fluid system 230, thereby allowing for servicing of the temperature regulation target 240 of the vehicle 200 without sacrificing an efficiency of the fluid system 230 of the vehicle 200.

According to examples of the fluid control device 10, the fluid control device 10 may be provided as follows:
Example 1: A fluid control device 10 configured for use on a vehicle 200, the fluid control device 10 including: a first connection element 20 configured to connect with a fluid manifold 250 of a vehicle 200, the first connection element 20 extending axially between a first end 22 and a second end 24 along an axis A-A, the first connection element 20 defining a first opening 26 at the first end 22 of the first connection element 20, a second opening 28 at the second end 24 of the first connection element 20, and a cavity 30 extending between the first opening 26 and the second opening 28 of the first connection element 20; an insert 50 configured to be received within the cavity 30 of the first connection element 20, the insert 50 extending axially between a first end 52 and a second end 54, the insert 50 defining an inlet 56 at or adjacent to the first end 52 of the insert 50, an outlet 58 at or adjacent to the second end 54 of the insert 50, and a channel 62 extending between the inlet 56 and the outlet 58 of the insert 50, the insert 50 being configured to be transitioned axially between a first position and a second position; and a second connection element 80 configured to connect with the first connection element 20 and to transition the insert 50 from the first position of the insert 50 toward the second position of the insert 50 when the second connection element 80 is connected with the first connection element 20.
Example 2: The fluid control device 10 according to Example 1, wherein the inlet 56 of the insert 50 is not capable of receiving a flow of a fluid when the insert 50 is in the first position of the insert 50 and the inlet 56 of the insert 50 is capable of receiving a flow of the fluid when the insert 50 is in the second position of the insert 50.
Example 3: The fluid control device 10 according to any of Examples 1-2, including a bias member 70 configured to bias the insert 50 toward the first position of the insert 50.
Example 4: The fluid control device 10 according to Example 3, wherein the bias member 70 is oriented radially about the insert 50.
Example 5: The fluid control device 10 according to any of Examples 3-4, wherein the bias member 70 is oriented between the second end 54 of the insert 50 and the second end 22 of the first connection element 20.
Example 6: The fluid control device 10 according to any of Examples 1-5, wherein the first connection element 20 extends to a first length, the insert 50 extends to a second length, and the second length of the insert 50 is greater than the first length of the first connection element 20.
Example 7: The fluid control device 10 according to any of Examples 1-6, wherein the first connection element 20 includes a first engagement surface 40 configured to engage with the bias member 70.
Example 8: The fluid control device 10 according to any of Examples 1-7, wherein the insert 50 includes a second engagement surface 60 configured to engage with the bias member 70.
Example 9: The fluid control device (10) according to Example 8, wherein the second engagement surface 60 of the insert 50 is oriented at or adjacent to the second end 54 of the insert 50.
Example 10: The fluid control device 10 according to any of Examples 8-9, wherein the second connection element 80 includes a third engagement surface 100 configured to engage with the second engagement surface 60 of the insert 50.
Example 11: The fluid control device 10 according to any of Examples 1-10, wherein the first connection element 20 includes a fastening member 32 at or adjacent to the first end 22 of the first connection element 20 configured to connect with the fluid manifold 250 of the vehicle 200.
Example 12: The fluid control device 10 according to any of Examples 1-11, wherein the second connection element 80 defines a first opening 92 at the first end 82 of the second connection element 80, a second opening 94 at the second end 84 of the second connection element 80, and a passage 96 extending between the first opening 92 and the second opening 94 of the second connection element 80.
Example 13: The fluid control device 10 according to Example 12, wherein the passage 96 of the second connection element 80 is configured to receive at least a portion of the first connection element 20.
Example 14: The fluid control device 10 according to any of Examples 12-13, wherein the passage 96 of the second connection element 80 is configured to receive at least a portion of the insert 50.
Example 15: The fluid control device 10 according to any of Examples 1-14, wherein the first end 52 of the insert 50 is closed.
Example 16: The fluid control device 10 according to any of Examples 1-15, wherein the inlet 56 of the insert 50 is offset axially from the first end 52 of the insert 50.
Example 17: The fluid control device 10 according to any of Examples 1-16, wherein the insert 50 includes a seal 53 at or adjacent to the first end 52 of the insert 50 configured to seal against one or more of the first connection element 20 and the fluid manifold 250 of the vehicle 200.
Example 18: A fluid system 230 configured for use on a vehicle 200, the fluid system 230 including: a fluid line 232 configured to circulate a fluid through a vehicle 200 and the fluid control device 10 according to any of Examples 1-17.
Example 19: A vehicle 200 including: a fluid manifold 250 configured to be in communication with a fluid line 232 of a fluid system 200 of the vehicle 200 and the fluid control device 10 according to any of Examples 1-17.
Example 20: A method of regulating a fluid within a fluid system 230 of a vehicle 200, the method including: providing the fluid control device 10 according to any of Examples 1-17 and removing the second connection element 80 from the first connection element 20 to restrict a flow of a fluid through a fluid line 232 of a fluid system 230 of a vehicle 200.

Although the present disclosure herein has been described with reference to particular examples, it is to be understood that these examples are merely illustrative of the principles and applications of the present disclosure.

It is intended that the specification and examples be considered as exemplary only, with a true scope of the disclosure being indicated by the following claims.

Additionally, all of the disclosed features of an apparatus may be transposed, alone or in combination, to a method and vice versa.

## Claims

1. A fluid control device (10) configured for use on a vehicle (200), the fluid control device comprising:
a first connection element (20) configured to connect with a fluid manifold (250) of a vehicle (200), the first connection element extending axially between a first end (22) and a second end (24) along an axis (A-A), the first connection element defining a first opening (26) at the first end of the first connection element, a second opening (28) at the second end of the first connection element, and a cavity (30) extending between the first opening and the second opening of the first connection element;
an insert (50) configured to be received within the cavity (30) of the first connection element (20), the insert extending axially between a first end (52) and a second end (54), the insert defining an inlet (56) at or adjacent to the first end of the insert, an outlet (58) at or adjacent to the second end of the insert, and a channel (62) extending between the inlet and the outlet of the insert, the insert being configured to be transitioned axially between a first position and a second position; and
a second connection element (80) configured to connect with the first connection element (20) and to transition the insert (50) from the first position of the insert toward the second position of the insert when the second connection element is connected with the first connection element.

2. The fluid control device (10) according to claim 1, wherein the inlet (56) of the insert (50) is not capable of receiving a flow of a fluid when the insert is in the first position of the insert and the inlet of the insert is capable of receiving a flow of the fluid when the insert is in the second position of the insert.

3. The fluid control device (10) according to any of claims 1-2, comprising a bias member (70) configured to bias the insert (50) toward the first position of the insert.

4. The fluid control device (10) according to claim 3, wherein the bias member (70) is oriented radially about the insert (50).

5. The fluid control device (10) according to any of claims 3-4, wherein the bias member (70) is oriented between the second end (54) of the insert (50) and the second end (22) of the first connection element (20).

6. The fluid control device (10) according to any of claims 1-5, wherein the first connection element (20) extends to a first length, the insert (50) extends to a second length, and the second length of the insert is greater than the first length of the first connection element.

7. The fluid control device (10) according to any of claims 1-6, wherein the first connection element (20) includes a first engagement surface (40) configured to engage with the bias member (70).

8. The fluid control device (10) according to any of claims 1-7, wherein the insert (50) includes a second engagement surface (60) configured to engage with the bias member (70).

9. The fluid control device (10) according to claim 8, wherein the second connection element (80) includes a third engagement surface (100) configured to engage with the second engagement surface (60) of the insert (50).

10. The fluid control device (10) according to any of claims 1-9, wherein the second connection element (80) defines a first opening (92) at the first end (82) of the second connection element, a second opening (94) at the second end (84) of the second connection element, and a passage (96) extending between the first opening and the second opening of the second connection element.

11. The fluid control device (10) according to claim 10, wherein the passage (96) of the second connection element (80) is configured to receive at least a portion of the first connection element (20).

12. The fluid control device (10) according to any of claims 9-10, wherein the passage (96) of the second connection element (80) is configured to receive at least a portion of the insert (50).

13. A fluid system (230) configured for use on a vehicle (200), the fluid system comprising:
a fluid line (232) configured to circulate a fluid through a vehicle (200); and
the fluid control device (10) according to any of claims 1-12.

14. A vehicle (200) comprising:
a fluid manifold (250) configured to be in communication with a fluid line (232) of a fluid system (200) of the vehicle (200); and
the fluid control device (10) according to any of claims 1-12.

15. A method of regulating a fluid within a fluid system (230) of a vehicle (200), the method comprising:
providing the fluid control device (10) according to any of claims 1-12; and
removing the second connection element (80) from the first connection element (20) to restrict a flow of a fluid through a fluid line (232) of a fluid system (230) of a vehicle (200).
